# EUROPEAN PATENT APPLICATION

(11) **EP 4 296 839 A1**
(43) Date of publication of application: **27.12.2023**
(21) Application number: 22770362.6
(22) Date of filing: 09.03.2022
(51) Int. Cl.: G06F 3/0488, G06F 3/0485

(54) **SCREENSHOT METHOD, ELECTRONIC DEVICE, AND STORAGE MEDIUM**

(30) Priority: 18.03.2021 CN 202110292289
(71) Applicant: Huawei Technologies Co., Ltd., Shenzhen, Guangdong 518129 (CN)
(72) Inventor: LUO, Hao, Shenzhen, Guangdong 518129 (CN); CHEN, Gang, Shenzhen, Guangdong 518129 (CN); MENG, Qingbin, Shenzhen, Guangdong 518129 (CN)
(74) Representative: Goddar, Heinz J.
(86) International application number: PCT/CN2022/079955
(87) International publication number: WO 2022/194007

(57) **Abstract**

Embodiments of this application provide a screenshot method, an electronic device, and a storage medium, and relate to the field of computers. The method includes: in response to a detected multi-finger swipe operation of a user, obtaining first touch data of the user; parsing the first touch data, and updating the first touch data based on a parsing result to obtain second touch data; parsing the second touch data, to determine whether a user gesture corresponding to the second touch data is a preset screenshot gesture; and if it is determined that the user gesture corresponding to the second touch data is the preset screenshot gesture, performing a screenshot operation. The method provided in embodiments of this application can avoid a page scrolling situation caused by a user in a screenshot process, thereby improving user experience.

## Description

This application claims priority to Chinese Patent Application No. 202110292289.9, filed with the China National Intellectual Property Administration on March 18, 2021 and entitled "SCREENSHOT METHOD, ELECTRONIC DEVICE, AND STORAGE MEDIUM", which is incorporated herein by reference in its entirety.

### TECHNICAL FIELD

Embodiments of this application relate to the field of computers, and in particular, to a screenshot method, an electronic device, and a storage medium.

### BACKGROUND

With continuous development of electronic technologies, most electronic devices (for example, a mobile phone, a tablet, or a notebook) with a display have a touchscreen function, which brings convenience to an operation of a user. In addition, the user may take a screenshot of a screen through a multi-finger operation. For example, the user may take a screenshot through a three-finger swiping down gesture.

In actual application, if content displayed on a current page of an application program exceeds a display area of a display of the electronic device, the current page may include a scroll bar, so that the user may browse the content that exceeds the display area by performing an operation on the scroll bar. For example, the user may perform an operation on the current page through a gesture (for example, a two-finger swiping down gesture), so that the current page can be scrolled, and the user can browse the content that is not displayed.

When the user expects to take a screenshot through a screenshot gesture (for example, three-finger swiping down), because the three-finger swiping down gesture is simultaneously parsed by the electronic device as a two-finger swiping down gesture, screenshot and page scrolling may be triggered at the same time. Consequently, the user cannot capture an expected page (that is, the current page on which scrolling does not occur), and user experience is reduced.

### SUMMARY

Embodiments of this application provide a screenshot method, an electronic device, and a storage medium, to provide a manner of taking a screenshot on a page, to avoid a case in which page scrolling and screenshot occur at the same time.

According to a first aspect, an embodiment of this application provides a screenshot method, applied to an electronic device, and including:
in response to a detected multi-finger swipe operation of a user, obtaining first touch data of the user, where specifically, the first touch data may be created based on the multi-finger swipe operation of the user, and the first touch data may include a touch point quantity of the user and touch point information;
parsing the first touch data, and updating the first touch data based on a parsing result to obtain second touch data, where specifically, the second touch data and the first touch data may include a same field, and a value of the field in the second touch data may be different from a value of the field in the first touch data; and
parsing the second touch data to determine whether a user gesture corresponding to the second touch data is a preset screenshot gesture; and performing a screenshot operation if it is determined that the user gesture corresponding to the second touch data is the preset screenshot gesture.

In this embodiment of this application, the touch data is filtered, so that a screenshot action of the user can be prevented from being misunderstood as a scrolling operation. Therefore, screenshot efficiency of the user can be improved, and user experience can be improved.

In a possible implementation, the first touch data includes a touch point quantity, and the updating the first touch data based on a parsing result to obtain second touch data includes:
comparing the touch point quantity in the first touch data with a preset first value; and
if the touch point quantity in the first touch data is consistent with the preset first value, updating the touch point quantity in the first touch data to obtain the second touch data, where the second touch data includes a touch point quantity of a preset second value.

In this embodiment of this application, the touch data is filtered by changing a value of the touch point quantity in the touch data, so that filtering efficiency can be improved.

To effectively identify the second touch data and improve the filtering efficiency, in a possible implementation, the preset second value is a special value.

In a possible implementation, a first application program is installed in the electronic device, the first application program is configured to take a screenshot, and the parsing the second touch data includes:
in response to a received data request of the first application program, sending the second touch data to the first application program, so that the first application program parses the second touch data.

In this embodiment of this application, an application program actively obtains the second touch data, so that gesture identification efficiency can be improved.

In a possible implementation, a second application program is further installed in the electronic device, and the second application program is configured to display a page, and the method further includes:
obtaining an identity of the second application program; and
if the identity of the second application program is in a preset trustlist, prohibiting performing the screenshot operation, where the preset trustlist includes an identity of one or more application programs.

In this embodiment of this application, it is determined, by identifying the second application program, whether to prohibit performing the screenshot operation. In this way, mistaken screenshots in the second application program can be avoided.

In a possible implementation, a second application program is further installed in the electronic device, and the second application program is configured to display a page, and the method further includes:
obtaining the identity of the second application program; and
if the identity of the second application program is in the preset trustlist, sending a screenshot prompt, where the screenshot prompt prompts the user whether to take a screenshot.

In this embodiment of this application, the prompt is sent, so that the user determines whether to take the screenshot. In this way, screenshot flexibility can be improved, and user experience can be improved.

In a possible implementation, the second touch data includes a plurality of pieces of touch point data, each piece of touch point data includes touch point coordinates, and the parsing the second touch data to determine whether a user gesture corresponding to the second touch data is a preset screenshot gesture includes:
reading the touch point data in the second touch data, and determining that a total quantity of pieces of the touch point data is the touch point quantity;
determining an action of the user based on a change of the touch point coordinates in the touch point data in the second touch data; and
determining, based on the touch point quantity and the action of the user, whether the user gesture corresponding to the second touch data is the preset screenshot gesture, where the preset screenshot gesture includes a preset touch point quantity and a preset action.

In this embodiment of this application, it is determined, based on the touch point quantity and the action, whether the user gesture is the preset screenshot gesture, so that the gesture identification efficiency can be improved.

An embodiment of this application further provides a screenshot method, applied to an electronic device, and including:
in response to a detected multi-finger swipe operation of a user, obtaining first touch data of the user; parsing the first touch data to determine whether a user gesture corresponding to the first touch data is a preset screenshot gesture; and performing a screenshot operation if it is determined that the user gesture corresponding to the first touch data is the preset screenshot gesture.

In this embodiment of this application, the screenshot gesture of the user can be identified by identifying the touch data, so that simultaneous occurrence of the screenshot operation and a page scrolling operation can be avoided, and user experience can be improved.

In a possible implementation, the first touch data includes a plurality of pieces of touch point data, each piece of touch point data includes touch point coordinates, and the parsing the first touch data to determine whether a user gesture corresponding to the first touch data is a preset screenshot gesture includes:
obtaining two pieces of first touch data and a touch point quantity in the first touch data;
determining an action of the user based on a change of touch point coordinates of touch point data in the two pieces of first touch data; and
determining, based on the touch point quantity in the first touch data and the action of the user, whether the user gesture corresponding to the first touch data is the preset screenshot gesture.

In this embodiment of this application, the two pieces of first touch data are identified to determine the user gesture, so that identification speed can be accelerated. Therefore, the screenshot operation can be identified before the page scrolling operation is identified, and the simultaneous occurrence of the page scrolling operation and the screenshot operation can be further avoided.

To improve screenshot efficiency, in a possible implementation, a first application program is installed in the electronic device, the first application program is configured to take a screenshot, and the performing a screenshot operation if it is determined that the user gesture corresponding to the first touch data is the preset screenshot gesture includes:
sending a screenshot indication to the first application program if it is determined that the user gesture corresponding to the first touch data is the preset screenshot gesture, where the screenshot indication indicates the first application program to perform the screenshot operation.

According to a second aspect, an embodiment of this application provides a screenshot apparatus, applied to an electronic device and including:
an obtaining module, configured to obtain first touch data of a user in response to a detected multi-finger swipe operation of the user;
an updating module, configured to: parse the first touch data, and update the first touch data based on a parsing result to obtain second touch data;
a parsing module, configured to: parse the second touch data, to determine whether a user gesture corresponding to the second touch data is a preset screenshot gesture; and
a screenshot module, configured to perform a screenshot operation if it is determined that the user gesture corresponding to the second touch data is the preset screenshot gesture.

In a possible implementation, the first touch data includes a touch point quantity, and the updating module is further configured to: compare the touch point quantity in the first touch data with a preset first value; and if the touch point quantity in the first touch data is consistent with the preset first value, update the touch point quantity in the first touch data to obtain the second touch data, where the second touch data includes a touch point quantity of a preset second value.

In a possible implementation, the preset second value is a special value.

In a possible implementation, a first application program is installed in the electronic device, the first application program is configured to take a screenshot, and the parsing module is further configured to send the second touch data to the first application program in response to a received data request of the first application program, so that the first application program parses the second touch data.

In a possible implementation, a second application program is further installed in the electronic device, the second application program is configured to display a page, and the apparatus further includes:
a prohibition module, configured to: obtain an identity of the second application program; and if the identity of the second application program is in a preset trustlist, prohibit performing the screenshot operation, where the preset trustlist includes an identity of one or more application programs.

In a possible implementation, a second application program is further installed in the electronic device, the second application program is configured to display a page, and the apparatus further includes:
a prompt module, configured to: obtain the identity of the second application program; and if the identity of the second application program is in the preset trustlist, send a screenshot prompt, where the screenshot prompt prompts the user whether to take a screenshot.

In a possible implementation, the second touch data includes a plurality of pieces of touch point data, each piece of touch point data includes touch point coordinates, and the parsing module is further configured to: read the touch point data in the second touch data, and determine that a total quantity of pieces of touch point data is a touch point quantity; determine an action of the user based on a change of the touch point coordinates in the touch point data in the second touch data; and determine, based on the touch point quantity and the action of the user, whether the user gesture corresponding to the second touch data is the preset screenshot gesture, where the preset screenshot gesture includes a preset touch point quantity and a preset action.

An embodiment of this application further provides a screenshot apparatus, applied to an electronic device, and including:
an obtaining module, configured to obtain first touch data of a user in response to a detected multi-finger swipe operation of the user;
a parsing module, configured to: parse the first touch data, to determine whether a user gesture corresponding to the first touch data is a preset screenshot gesture; and
a screenshot module, configured to perform a screenshot operation if it is determined that the user gesture corresponding to the first data is the preset screenshot gesture.

In a possible implementation, the first touch data includes a plurality of pieces of touch point data, each piece of touch point data includes touch point coordinates, and the parsing module is further configured to: obtain two pieces of first touch data and a touch point quantity in the first touch data; determine an action of the user based on a change of touch point coordinates of touch point data in the two pieces of first touch data; and determine, based on the touch point quantity in the first touch data and the action of the user, whether the user gesture corresponding to the first touch data is the preset screenshot gesture.

In a possible implementation, a first application program is installed in the electronic device, the first application program is configured to take a screenshot, and the screenshot module is further configured to send a screenshot indication to the first application program if it is determined that the user gesture corresponding to the first touch data is the preset screenshot gesture, where the screenshot indication indicates the first application program to perform the screenshot operation.

According to a third aspect, an embodiment of this application provides an electronic device, including:
a memory, where the memory is configured to store computer program code, the computer program code includes instructions, and when the electronic device reads the instructions from the memory, the electronic device is enabled to perform the following steps:
in response to a detected multi-finger swipe operation of a user, obtaining first touch data of the user;
parsing the first touch data, and updating the first touch data based on a parsing result to obtain second touch data;
parsing the second touch data to determine whether a user gesture corresponding to the second touch data is a preset screenshot gesture; and
performing a screenshot operation if it is determined that the user gesture corresponding to the second touch data is the preset screenshot gesture.

In a possible implementation, the first touch data includes a touch point quantity, and when the instructions are executed by the electronic device, the step in which the electronic device is enabled to update the first touch data based on a parsing result to obtain second touch data includes:
comparing the touch point quantity in the first touch data with a preset first value; and
if the touch point quantity in the first touch data is consistent with the preset first value, updating the touch point quantity in the first touch data to obtain the second touch data, where the second touch data includes a touch point quantity of a preset second value.

In a possible implementation, the preset second value is a special value.

In a possible implementation, a first application program is installed in the electronic device, the first application program is configured to take a screenshot, and when the instructions are executed by the electronic device, the step in which the electronic device is enabled to parse the second touch data includes:
in response to a received data request of the first application program, sending the second touch data to the first application program, so that the first application program parses the second touch data.

In a possible implementation, a second application program is further installed in the electronic device, the second application program is configured to display a page, and when the instructions are executed by the electronic device, the electronic device is enabled to further perform the following steps:
obtaining an identity of the second application program; and
if the identity of the second application program is in a preset trustlist, prohibiting performing the screenshot operation, where the preset trustlist includes an identity of one or more application programs.

In a possible implementation, the second application program is further installed in the electronic device, the second application program is configured to display a page, and when the instructions are executed by the electronic device, the electronic device is enabled to further perform the following steps:
obtaining the identity of the second application program; and
if the identity of the second application program is in a preset trustlist, sending a screenshot prompt, where the screenshot prompt prompts the user whether to take a screenshot.

In a possible implementation, the second touch data includes a plurality of pieces of touch point data, each piece of touch point data includes touch point coordinates, and when the instructions are executed by the electronic device, the step in which the electronic device is enabled to parse the second touch data to determine whether the user gesture corresponding to the second touch data is the preset screenshot gesture includes:
reading the touch point data in the second touch data, and determining that a total quantity of pieces of the touch point data is a touch point quantity;
determining an action of the user based on a change of the touch point coordinates in the touch point data in the second touch data; and
determining, based on the touch point quantity and the action of the user, whether the user gesture corresponding to the second touch data is the preset screenshot gesture.

An embodiment of this application further provides an electronic device, including:
a memory, where the memory is configured to store computer program code, the computer program code includes instructions, and when the electronic device reads the instructions from the memory, the electronic device is enabled to perform the following steps:
in response to a detected multi-finger swipe operation of a user, obtaining first touch data of the user;
parsing the first touch data to determine whether a user gesture corresponding to the first touch data is a preset screenshot gesture; and
performing a screenshot operation if it is determined that the user gesture corresponding to the first touch data is the preset screenshot gesture.

In a possible implementation, the first touch data includes a plurality of pieces of touch point data, each piece of touch point data includes touch point coordinates, and when the instructions are executed by the electronic device, the step in which the electronic device is enabled to parse the first touch data to determine whether a user gesture corresponding to the first touch data is a preset screenshot gesture includes:
obtaining two pieces of first touch data and a touch point quantity in the first touch data;
determining an action of the user based on a change of touch point coordinates of touch point data in the two pieces of first touch data; and
determining, based on the touch point quantity in the first touch data and the action of the user, whether the user gesture corresponding to the first touch data is the preset screenshot gesture.

In a possible implementation, a first application program is installed in the electronic device, the first application program is configured to take a screenshot, and when the instructions are executed by the electronic device, the step in which the electronic device is enabled to perform a screenshot operation if it is determined that the user gesture corresponding to the first screenshot data is the preset screenshot gesture includes:
sending a screenshot indication to the first application program if it is determined that the user gesture corresponding to the first touch data is the preset screenshot gesture, where the screenshot indication indicates the first application program to perform the screenshot operation.

According to a fourth aspect, an embodiment of this application provides a computer-readable storage medium, where the computer-readable storage medium stores a computer program, and when the computer program runs on a computer, the computer is enabled to perform the method according to the first aspect.

According to a fifth aspect, an embodiment of this application provides a computer program. When the computer program is executed by a computer, the computer program is configured to perform the method according to the first aspect.

In a possible design, all or a part of the program in the fifth aspect may be stored in a storage medium encapsulated with a processor, or a part or all of the program may be stored in a memory that is not encapsulated with the processor.

### BRIEF DESCRIPTION OF DRAWINGS

FIG. 1 is a schematic diagram of a software architecture of an electronic device according to an embodiment of this application;
FIG. 2 is a schematic diagram of a hardware structure of an electronic device according to an embodiment of this application;
FIG. 3 is a schematic flowchart of an embodiment of a screenshot method this application;
FIG. 4 is a schematic diagram of a user gesture according to an embodiment of this application;
FIG. 5 to FIG. 7 are schematic diagrams of touch data according to an embodiment of this application;
FIG. 8A and FIG. 8B are a schematic diagram of gesture identification according to an embodiment of this application;
FIG. 9 is a schematic flowchart of another embodiment of a screenshot method of this application;
FIG. 10 is a schematic diagram of an embodiment of a structure of a screenshot apparatus of this application; and
FIG. 11 is a schematic diagram of another embodiment of a structure of a screenshot apparatus of this application.

### DESCRIPTION OF EMBODIMENTS

The following describes the technical solutions in embodiments of this application with reference to the accompanying drawings in embodiments of this application. In the descriptions of embodiments of this application, unless otherwise specified, "/" represents or, for example, A/B may represent A or B; and "and/or" in this specification is merely an association relationship for describing associated objects, and indicates that three relationships may exist, for example, A and/or B may indicate the following three cases: A exists alone, both A and B exist, and B exists alone.

In the following, terms "first" and "second", are merely used for a purpose of description, and shall not be understood as an indication or implication of relative importance or implicit indication of a quantity of indicated technical features. Therefore, a feature limited by "first" or "second" may explicitly or implicitly include one or more of the features. In the descriptions of embodiments of this application, unless otherwise specified, "a plurality of" means two or more than two.

Currently, when a user performs an operation on a display of an electronic device through a touch gesture, the electronic device may obtain touch data of the user. A notebook computer is used as an example. The notebook computer may obtain the touch data of the user through a human interface device (Human Interface Device, HID) driver in Windows. Then, the HID driver may send the touch data to an HID service. After receiving the touch data, the HID service may parse the touch data.

Generally, the user may take a screenshot of content on a current page through a screenshot gesture (for example, three-finger swiping down). However, in actual application, the swiping down gesture also triggers a screen scrolling operation at the same time, so that screenshot and a scrolling operation are triggered at the same time. Consequently, the user cannot capture expected content (that is, the current page on which scrolling does not occur), and user experience is reduced.

Based on the foregoing problem, an embodiment of this application provides a screenshot method, applied to the electronic device. The electronic device may be a display device with a display, for example, a mobile phone, a tablet, or a notebook computer. A specific form of the electronic device is not specially limited in this embodiment of this application. According to the method in this application, a case in which a page is scrolled by the user in a screenshot process can be effectively avoided, and user experience can be improved.

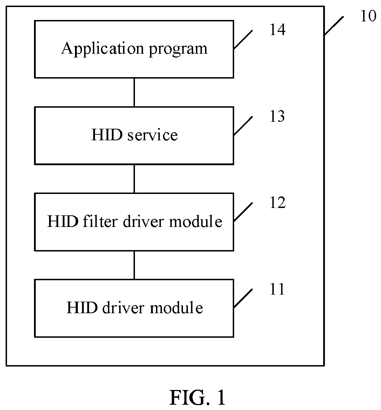

A notebook computer is used as an example. With reference to FIG. 1 to FIG. 7, a screenshot method provided in an embodiment of this application is described. FIG. 1 is a diagram of a software architecture of a notebook computer 10. As shown in FIG. 1, the notebook computer 10 includes an HID driver module 11, an HID filter driver module 12, an HID service 13, and an application program 14.

The HID driver module 11 is configured to: obtain touch data, and send the touch data to the HID filter driver module 12. The touch data may be generated based on a user gesture.

The HID filter driver module 12 is configured to: receive the touch data sent by the HID driver module 11, read a value of a touch point quantity field in the touch data, match the value of the touch point quantity field with a touch point quantity of a preset screenshot gesture, and if the value of the touch point quantity field matches the touch point quantity of the preset screenshot gesture, modify the value of the touch point quantity field, and send the modified touch data to the HID service 13.

Optionally, the HID filter driver module 12 may alternatively receive the touch data sent by the HID driver module 11, identify the touch data to obtain a corresponding user gesture, and if the user gesture matches the preset screenshot gesture, and directly send the screenshot gesture to the application program 14.

The HID service 13 is configured to: receive the touch data sent by the HID filter driver module 12, determine touch point information in the touch data, to determine whether a swiping down gesture exists, and if the swiping down gesture does not exist, send the touch data to the application program 14 based on a request of the application program 14.

The application program 14 is configured to: send a touch data request to the HID service 13, to obtain the touch data. The application program 14 may be further configured to: receive the touch data sent by the HID service 13, obtain the touch point quantity and a coordinate in the touch data, perform identification based on the touch point quantity and the coordinate, obtain a corresponding user gesture, match the user gesture with the preset screenshot gesture, and if the user gesture matches the preset screenshot gesture, perform a corresponding screenshot operation.

Optionally, the application program 14 may be further configured to: receive a screenshot indication sent by the HID filter driver module 12, and perform a corresponding screenshot operation based on the screenshot indication.

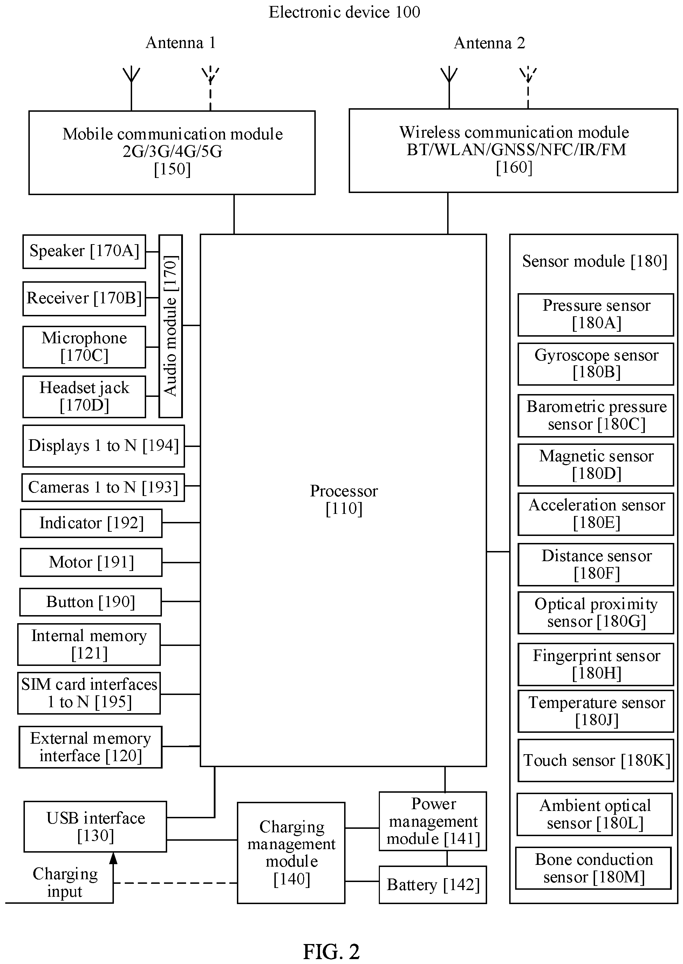

The following first describes an example electronic device provided in the following embodiments of this application with reference to FIG. 2. FIG. 2 is a schematic diagram of a structure of an electronic device 100. The electronic device 100 may be a display device with a display, for example, a mobile phone, a tablet, or a notebook computer.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent components, or may be integrated into one or more processors. The controller may be a nerve center and a command center of the electronic device 100. The controller may generate an operation control signal based on an instruction operation code and a time sequence signal, and complete control of reading instructions and executing instructions.

A memory may be further disposed in the processor 110, configured to store instructions and data. In some embodiments, the memory in the processor 110 is a cache memory. The memory may store instructions or data that is just used or cyclically used by the processor 110. If the processor 110 needs to use the instructions or the data again, the instructions or the data may be directly invoked from the memory. Repeated access is avoided, waiting time of the processor 110 is reduced, and efficiency of a system is improved.

The screenshot method provided in this embodiment of this application may be performed by the processor 110 by controlling or invoking another component, for example, by invoking a processing program in this embodiment of this application stored in the internal memory 121, to implement a screenshot operation of a user and improve user experience.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, and a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) port, and the like.

The USB interface 130 is an interface that complies with a USB standard specification, and may be specifically a mini USB interface, a micro USB interface, a USB Type C interface, or the like. The USB interface 130 may be configured to connect to a charger to charge the electronic device 100, or may be configured to transmit data between the electronic device 100 and a peripheral device. The USB interface 130 may also be configured to connect to a headset to play audio through the headset. The interface may be further configured to connect to another electronic device, for example, an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in conjunction with a tuning switch.

The mobile communication module 150 may provide a solution of wireless communication that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium/high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (not limited to the speaker 170A, the receiver 170B, or the like), or display an image or a video through the display 194. In some embodiments, the modem processor may be an independent component. In some other embodiments, the modem processor may be independent of the processor 110, and may be disposed in a same component with the mobile communication module 150 or another function module.

The wireless communication module 160 may provide a solution of wireless communication that is applied to the electronic device 100 and that includes a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), a frequency modulation (frequency modulation, FM) technology, a near field communication (near field communication, NFC) technology, an infrared (infrared, IR) technology, and the like. The wireless communication module 160 may be one or more components that integrate at least one communication processing module. The wireless communication module 160 receives the electromagnetic wave through the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, and/or the IR technology, and the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function through a GPU, the display 194, the application processor, and the like. The GPU is an image processing microprocessor, and is connected to the display 194 and the application processor. The GPU is configured to perform mathematical and geometric calculations, and is configured for graphics rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transmitted to a camera photosensitive element through a lens, an optical signal is converted into an electrical signal, and the camera photosensitive element transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG) 1, MPEG2, MPEG3, and MPEG4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition, for example, image identification, facial identification, speech identification, and text understanding, of the electronic device 100 may be implemented through the NPU.

The external memory interface 120 may be configured to connect to an external memory card, for example, a micro SD card, to extend a storage capability of the electronic device 100. The external memory card communicates with the processor 110 through the external memory interface 120, to implement a data storage function, for example, storing files such as music and videos in the external memory card.

The internal memory 121 may be configured to store computer-executable program code, and the executable program code includes instructions. The internal memory 121 may include a program storage area and a data storage area. The program storage area may store an operating system, an application program required by at least one function (for example, a sound playing function or an image playing function), and the like. The data storage area may store data (for example, audio data or a phonebook) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to execute various function applications and data processing of the electronic device 100.

The electronic device 100 may use the audio module 170, the speaker 170A, the receiver 170B, the microphone 170C, the headset jack 170D, the application processor, and the like, to implement audio functions, for example, music playing and recording.

The touch sensor 180K is also referred to as a "touch panel". The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor 180K. The touch sensor may transfer the detected touch operation to the application processor, to determine a touch event type. A visual output related to the touch operation may be provided through the display 194. In some other embodiments, the touch sensor 180K may alternatively be disposed on a surface of the electronic device 100, and is at a location different from that of the display 194.

In this embodiment of this application, the touch sensor 180K may obtain touch data of the user, and may send the touch data to the processor 110 for processing.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt, or may be configured to provide a touch vibration feedback. For example, touch operations performed on different applications (for example, photographing and audio playing) may correspond to different vibration feedback effects. For touch operations performed on different areas of the display 194, the motor 191 may also generate different vibration feedback effects. Different application scenarios (for example, a time reminder, information receiving, an alarm clock, and a game) may also correspond to different vibration feedback effects. The touch vibration feedback effect may also be customized.

The indicator 192 may be an indicator light, may be configured to indicate a charging status and a battery level change, and may also be configured to: indicate a message, a missed call, a notification, and the like.

The SIM card interface 195 is configured to connect to a SIM card. The SIM card may be inserted into the SIM card interface 195, or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with the external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

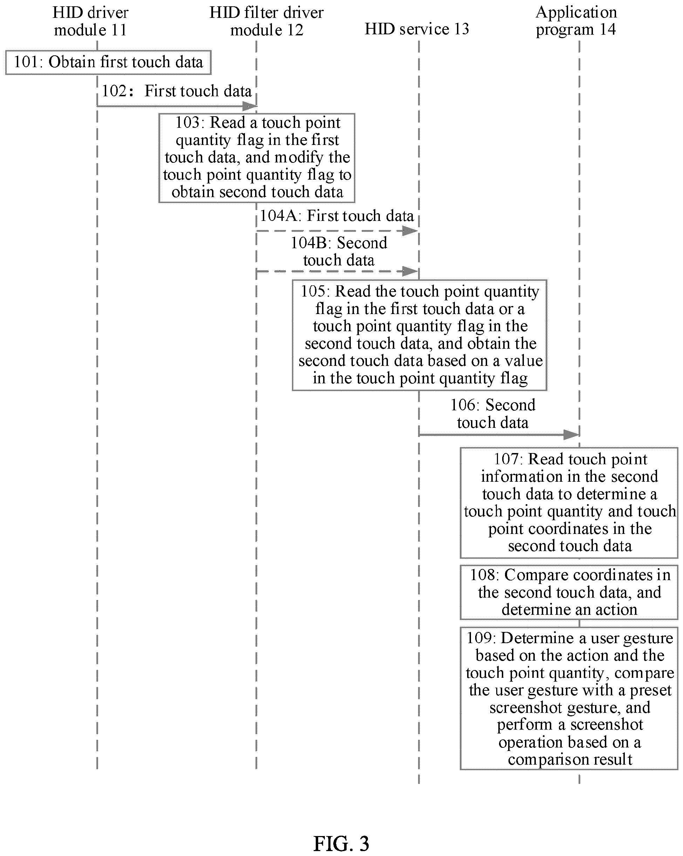

FIG. 3 is a schematic flowchart of an embodiment of a screenshot method according to an embodiment of this application. The method includes the following steps.

Step 101: The HID driver module 11 obtains first touch data.

Specifically, a user may perform an operation such as touch or swipe on a current page. For example, the user may perform the operation such as touch or swipe on the display 194 of the electronic device 100. The current page may include a web page of a browser and a PPT page. It may be understood that the web page of the browser and the PPT page are examples for description, and do not constitute a limitation on this embodiment of this application.

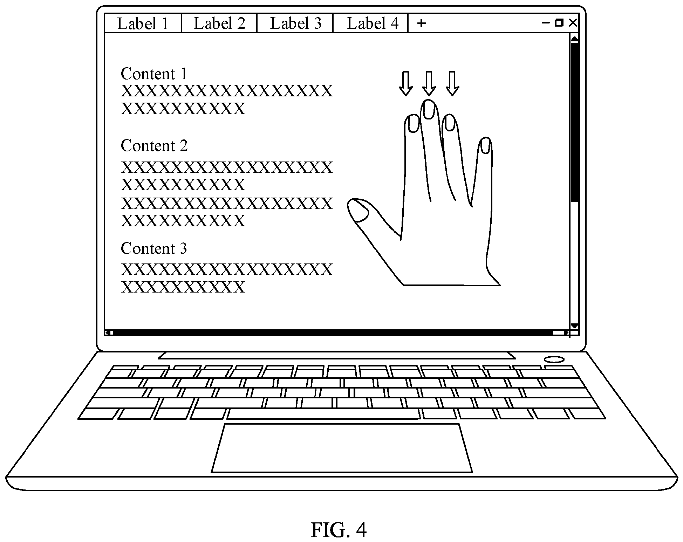

It should be noted that a swipe operation of the user may include a multi-finger swipe operation of the user. For example, the swipe may include swiping up, swiping down, swiping left, swiping right, and the like. This is not limited in this embodiment of this application. The multi-finger may include a gesture such as a three-finger gesture or a four-finger gesture, or may include another type of gesture. This is not specially limited in this embodiment of this application. FIG. 4 is a schematic diagram of three-finger swiping down according to an embodiment of this application.

The touch sensor 180K in the electronic device 100 detects an operation of the user, and the HID driver module 11 may generate corresponding first touch data based on the operation of the user. The first touch data may include information such as the touch point quantity and the touch coordinate.

It may be understood that the touch and swipe operation of the user is a continuous action. At a moment t, the HID driver module 11 may obtain one piece of first touch data S1, and the first touch data S1 corresponds to a coordinate of a finger of the user at the moment t. As the finger of the user swipes, at another moment t1, the HID driver module 11 receives another piece of first touch data S2, and the first touch data S2 corresponds to a coordinate of the finger of the user at the moment t1. Therefore, each piece of first touch data may also correspond to a moment, where the moment represents a moment at which the first touch data is generated.

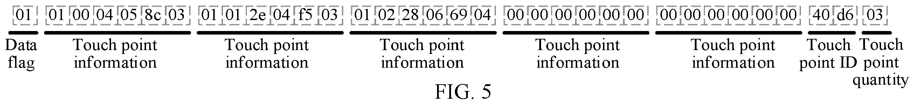

The first touch data may be represented in a form of a data packet. FIG. 5 is a schematic diagram of a data structure of the foregoing first touch data packet. As shown in FIG. 5, the first touch data packet may include 34-bit data information. For example, the 34-bit data information may include a data flag of 1-bit data information, touch point information of 30-bit data information, a touch point ID of 2-bit data information, and a touch point quantity flag of 1-bit data information. The data flag may be configured to identify whether the data is touch data. For example, if the data flag = 01, the data is the touch data. The touch point information may include five pieces of touch point information. In other words, the touch point information may include information about five touch points. Each touch point information includes 6-bit data information. The first bit data information of each piece of touch point information is used to identify whether the user presses the touch point. For example, if the first bit data information = 01, it indicates that the finger of the user presses the touch point, or if the first bit data information = 00, it indicates that the finger of the user lifts up. A second bit data information of each piece of touch point information is used to identify an ID number of the touch point. For example, if ID = 00, the touch point is the first touch point, or if ID = 01, the touch point is the second touch point. The rest may be deduced by analogy. The third to sixth bits of data information of each touch point information are used to identify a coordinate of the touch point. For example, the third and fourth bits in each piece of touch point information may be a horizontal coordinate of the touch point, and the fifth and sixth bits may be a vertical coordinate of the touch point. It may be understood that the third and fourth bits in each piece of touch point information may be the vertical coordinate of the touch point, and the fifth and sixth bits may be the horizontal coordinate of the touch point. This is not specially limited in this embodiment of this application. The touch point ID may be configured to identify an accumulated quantity of touch times. The touch point quantity flag identifies a touch point quantity detected by a current HID driver. For example, if the user performs finger swiping by using three fingers, the touch point quantity is 3.

It may be understood that the foregoing FIG. 5 is merely an example of a field format of the touch data. In some embodiments, the touch data may include more or fewer data bits, for example, more than the foregoing 34 bits of data information, or fewer than the foregoing 34 bits of data information. This is not specially limited in this application.

Step 102: The HID driver module 11 sends the first touch data to the HID filter driver module 12.

Specifically, the HID driver module 11 may sequentially send the plurality of pieces of first touch data to the HID filter driver module 12 in a time sequence. Further, the HID driver module 11 may send a moment corresponding to the first touch data to the HID filter driver module 12. For example, if the HID driver module 11 detects the first touch data S1 of the user at the moment t, the HID driver module 11 may send the first touch data S 1 and the corresponding moment t to the HID filter driver module 12 at the moment t. In this case, if the user swipes on the display of the electronic device 100 with a finger, the HID driver module 11 detects the first touch data S2 of the user at the moment t1, and may send the first touch data S2 and the corresponding moment t1 to the HID filter driver module 12 at the moment t1.

Optionally, the HID driver module 11 may also collect a plurality of pieces of first touch data in a preset time period, and send the plurality pieces of first touch data to the HID filter driver module 12 simultaneously. For example, if the HID driver module 11 detects the first touch data S1 of the user at the moment t, and then detects first touch data S2 and S3 of the user at moments t1 and t2, where both t1 and t2 are later than t, t2 is later than t1, and a time period between t2 and t is the preset time period, the HID driver module 11 may simultaneously send S1, S2, S3, and the corresponding moments t, t1, and t2 to the HID filter driver module 12. It may be understood that the foregoing manner of sending the plurality of pieces of first touch data and the corresponding moments is merely an example for description, and does not constitute a limitation on this embodiment of this application.

Step 103: The HID filter driver module 12 reads the touch point quantity flag in the first touch data, and modifies the touch point quantity flag to obtain second touch data.

Specifically, after receiving the first touch data sent by the HID driver module 11, the HID filter driver module 12 may read a value in the touch point quantity flag in the first touch data, and may perform determining based on the value. In a specific implementation, the value in the touch point quantity flag may be compared with a preset value. The preset value may be a touch point quantity of a preset screenshot gesture.

If the value in the touch point quantity flag in the first touch data is consistent with the preset value, the HID filter driver module 12 may consider that a current gesture of the user is a screenshot operation. In this case, the value in the touch point quantity flag in the first touch data may be modified to 0. Therefore, the second touch data may be obtained, and step 104B may be further performed. It may be understood that the value 0 is an example for description, and does not constitute a limitation on this embodiment of this application. In some embodiments, the value 0 may be another value or character. For example, if a three-finger swiping down action is the preset screenshot gesture, a touch point quantity corresponding to the screenshot gesture is 3, that is, a preset value of the touch point quantity is 3. It may be understood that the touch point quantity of the preset screenshot gesture is an example for description, and does not constitute a limitation on this embodiment of this application. In some embodiments, the touch point quantity of the preset screenshot gesture may also be another value. The second touch data is obtained by modifying the value in the touch point quantity flag in the first touch data to a special value (where for example, the value is 0). Because a value in a touch point quantity flag in the second touch data is a special value, the HID service 13 may no longer parse the second touch data. In other words, the HID service considers that the second touch data does not include a user gesture, and therefore does not parse the operation of the user as a swiping down operation. In this way, it can be avoided that the operation is incorrectly parsed as the swiping down operation.

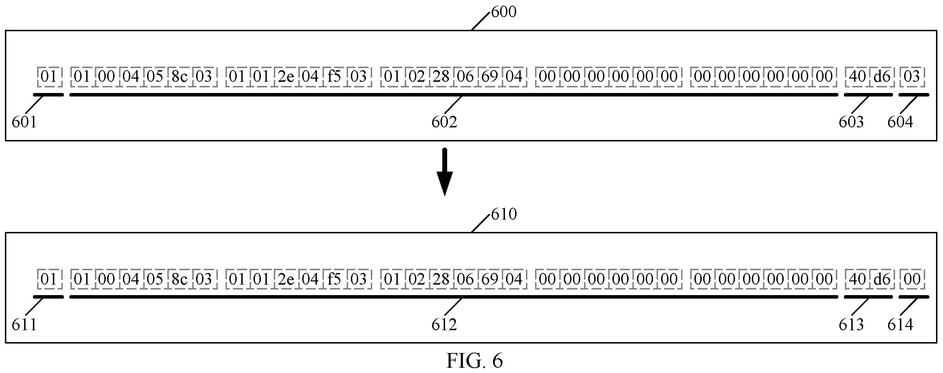

Descriptions are now provided with reference to FIG. 6. As shown in FIG. 6, the first touch data 600 includes a data flag 601, touch point information 602, a touch point ID 603, and a touch point quantity flag 604. A value in the touch point quantity flag 604 is 3. After the HID filter driver module 12 reads the value in the touch point quantity flag 604, because the value in the touch point quantity flag 604 is consistent with the touch point quantity of the preset screenshot gesture, the value in the touch point quantity flag 604 may be modified to 0, and second touch data 610 may be obtained. The second touch data 610 includes a data flag 611, touch point information 612, a touch point ID 613, and a touch point quantity flag 614. A value of the data flag 611 is the same as that of the data flag 601, information of the touch point information 612 is the same as that of the touch point information 602, information of the touch point ID 613 is the same as that of the touch point ID 603, and information of the touch point quantity flag 614 is different from that of the touch point quantity flag 604. The value in the touch point quantity flag 614 is 0, and the value in the touch point quantity flag 604 is 3.

If the value is inconsistent with the preset value, the HID filter driver module 12 may further perform step 104A.

Step 104A: The HID filter driver module 12 may send the first touch data to the HID service 13.

It should be noted that either of step 104A and step 104B is selected and performed. To be specific, step 104B is not performed after step 104A is performed.

Step 104B: The HID filter driver module 12 may send the second touch data to the HID service 13.

Optionally, the HID filter driver module 12 may also send a moment corresponding to the second touch data to the HID service 13.

Step 105: The HID service 13 receives the touch data sent by the HID filter driver module 12, reads a touch point quantity flag in the touch data, and determines the second touch data based on a value of the touch point quantity flag in the touch data.

Specifically, the HID service 13 receives the touch data sent by the HID filter driver module 12, and the touch data may include the first touch data or the second touch data. Then, the HID service 13 may read the value of the touch point quantity flag in the touch data, perform determining based on the value in the touch point quantity flag, and determine the second touch data based on a determining result.

For example, if a value of a touch point quantity flag of any touch data is a special value (for example, 0 or a character), the HID service 13 may consider that the touch data is the second touch data because 0 or the character is the special value. In other words, current touch data does not have a touch point quantity. Therefore, the HID service 13 does not trigger another operation (for example, a scrolling operation). In this case, the HID service 13 may send the second touch data to the application program 14.

If the value of the touch point quantity flag of any touch data is a normal value (for example, a non-zero value and a non-character value), the HID service 13 may consider that the touch data is the first touch data. The HID service 13 may then obtain an action of the user based on a coordinate in the first touch data. For example, if the action of the user is swiping down, the HID service 13 performs the scrolling operation.

Step 106: The HID service 13 sends the second touch data to the application program 14 based on a request of the application program 14.

Specifically, the application program 14 may be a screenshot application. For example, the screenshot application may provide a screenshot function. Optionally, the application program 14 may alternatively be a gesture processing application. For example, the gesture processing application may not include the screenshot function. After the gesture processing application is started, the screenshot function of a system may be invoked. A specific implementation form of the application program 14 is not specially limited in this embodiment of this application. In addition, the application program 14 may store a preset configuration file, and the configuration file may include the preset screenshot gesture. The screenshot gesture may include touch point quantity information and action information, the touch point quantity information may be used to identify the touch point quantity, and the action information may be used to identify an action of the user (for example, swiping up, swiping down, swiping left, or swiping right). It may be understood that the information in the configuration file may be preset by the user, or may be maintained by the user. For example, the user may change the touch point quantity information and/or the action information in the configuration file. Table 1 shows the information of the foregoing configuration file for example.

**Table 1**

| **User gesture** | **Touch point quantity** | **Action** |
|---|---|---|
| Screenshot | 3 | Swipe down |

It may be understood that, after the application program 14 is started, a touch data request may be sent to the HID service 13, where the touch data request requests to obtain the touch data received by the HID service 13. Therefore, after receiving the second touch data sent by the HID filter driver module 12, the HID service 13 may send the second touch data to the application program 14. Optionally, the HID service 13 may also send the moment corresponding to the second touch data to the application program 14.

Step 107: The application program 14 receives the second touch data sent by the HID service 13, reads the touch point information in the second touch data, and determines a touch point quantity and touch point coordinates in the second touch data.

Specifically, the application program 14 may read all touch point information in the second touch data. For example, any piece of second touch data may include five pieces of touch point information, and the application program 14 may sequentially read the touch point information according to an arrangement order of the touch point information in each second touch data (for example, according to an order of the second touch data 610 shown in FIG. 6), or may read the touch point information in another manner. This is not specially limited in this embodiment of this application.

The application program 14 may obtain data in the touch point information by reading the touch point information of each piece of second touch data, so that a touch point quantity and touch point coordinates included in each piece of second touch data can be determined. For example, if any touch point information includes non-all-zero data, the data in the touch point information is valid, that is, the touch point information is corresponding to one touch point.

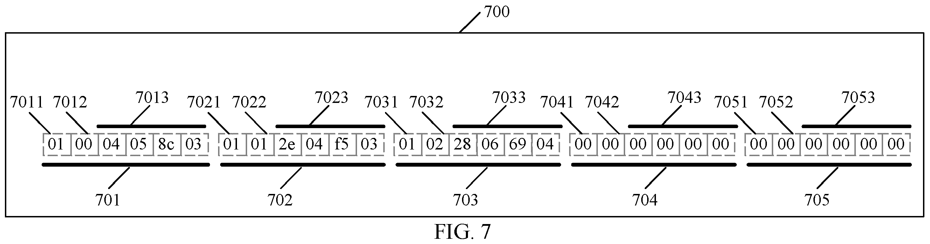

Descriptions are now provided with reference to FIG. 7. As shown in FIG. 7, the second touch data 700 includes first touch point information 701, second touch point information 702, third touch point information 703, fourth touch point information 704, and fifth touch point information 705. The first touch point information 701 includes a pressing flag 7011, a touch point ID 7012, and touch point coordinates 7013; the second touch point information 702 includes a pressing flag 7021, a touch point ID 7022, and touch point coordinates 7023; the third touch point information 703 includes a pressing flag 7031, a touch point ID 7032, and touch point coordinates 7033; the fourth touch point information 704 includes a pressing flag 7041, a touch point ID 7042, and touch point coordinates 7043; and the fifth touch point information 705 includes a pressing flag 7051, a touch point ID 7052, and touch point coordinates 7053. Data in the first touch point information 701, the second touch point information 702, and the third touch point information 703 is non-all-zero data. Therefore, the first touch point information 701, the second touch point information 702, and the third touch point information 703 are valid touch points. Then, data in the touch point coordinates 7013, 7023, and 7033 respectively in the first touch point information 701, the second touch point information 702, and the third touch point information 703 may be read, so that coordinates of a first touch point, a second touch point, and a third touch point may be obtained. However, data in the fourth touch point information 704 and the fifth touch point information 705 is all-zero data, so that the fourth touch point information 704 and the fifth touch point information 705 are invalid touch points. By reading the five pieces of touch point information in the second touch data 700, it may be determined that a touch point quantity in the second touch data 700 is 3. To be specific, the three touch points are the first touch point information 701, the second touch point information 702, and the third touch point information 703 respectively.

Step 108: The application program 14 compares the coordinates in the second touch data, and determines an action.

Specifically, after obtaining coordinates in a plurality of pieces of second touch data, the application program 14 may compare the coordinates in the plurality of pieces of second touch data, and determine the action of the user. In a specific implementation, the application program 14 may determine a time sequence of two pieces of second touch data. The time sequence may be determined based on a sequence of receiving the two pieces of second touch data by the application program 14. Optionally, the time sequence may also be determined based on moments corresponding to the two pieces of second touch data. This is not specially limited in this embodiment of this application. Then, the application program 14 may compare coordinates of touch point information in the two pieces of second touch data. Time sequences corresponding to the two pieces of second touch data are different. For example, a moment of one piece of second touch data S1 is t, and a moment of another piece of second touch data S2 is t1. The foregoing two pieces of second touch data may be two pieces of second touch data that are earliest received after an operation of the user is detected, or may be two pieces of second touch data that are randomly selected from the plurality pieces of second touch data after the operation of the user is detected. This is not limited in this embodiment of this application.

After the two pieces of second touch data and the corresponding time sequence are determined, the action may be determined based on the coordinates and the time sequence of the two pieces of touch data. For example, it is assumed that the moment of one piece of second touch data S1 is t, the moment of another piece of second touch data S2 is t1, and t1 is later than t. If a coordinate of S2 is below S1, it may be determined that the action is swiping down.

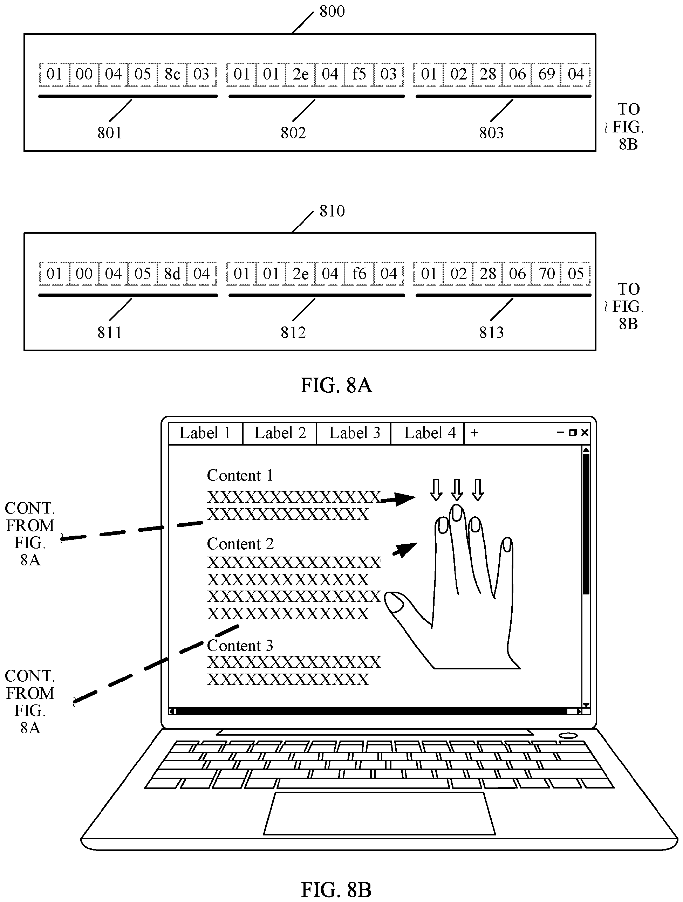

Descriptions are provided with reference to FIG. 8A and FIG. 8B. As shown in FIG. 8A and FIG. 8B, second touch data 800 at a moment t includes first touch point information 801, second touch point information 802, and third touch point information 803, where a coordinate corresponding to the first touch point information 801 is (04, 05, 8c, 03), a coordinate corresponding to the second touch point information 802 is (2e, 04, f5, 03), and a coordinate corresponding to the third touch point information 803 is (28, 06, 69, 04); and second touch data 810 at a moment t1 includes first touch point information 811, second touch point information 812, and third touch point information 813, where a coordinate corresponding to the first touch point information 811 is (04, 05, 8d, 04), a coordinate corresponding to the second touch point information 812 is (2e, 04, f6, 04), and a coordinate corresponding to the third touch point information 813 is (28, 06, 70, 05). It is assumed that the moment t1 is later than the moment t. Based on a coordinate change between the first touch point information 811 and the first touch point information 801, a coordinate change between the second touch point information 812 and the second touch point information 802, and a coordinate change between the third touch point information 813 and the third touch point information 803, for example, the coordinate of the first touch point information 811 is below the coordinate of the first touch point information 801, the coordinate of the second touch point information 812 is below the coordinate of the second touch point information 802, and the coordinate of the third touch point information 813 is below the coordinate of the third touch point information 803, it may be determined that a current action of the user is swiping down.

Optionally, when the action of the user is determined, it is also feasible to determine a change of only one touch point. For example, whether the current action of the user is swiping down may be determined based on a change of any touch point in a coordinate change between the first touch point information 811 and the first touch point information 801, a coordinate change between the second touch point information 812 and the second touch point information 802, or a coordinate change between the third touch point information 813 and the third touch point information 803.

It may be understood that the foregoing example is merely an example of a manner of comparing the two pieces of second touch data to determine the action, and a selected quantity of pieces of second touch data does not constitute a limitation on this embodiment of this application. In some embodiments, the application program 14 may also select more pieces of second touch data, for example, three pieces of second touch data or more pieces of second touch data, for comparison. For a specific comparison process, refer to the embodiment shown in FIG. 8A and FIG. 8B. Details are not described herein again.

Step 109: The application program 14 determines the user gesture based on the action and the touch point quantity, compares the user gesture with the preset screenshot gesture, and performs the screenshot operation based on a comparison result.

Specifically, after determining the action, the application program 14 may determine the user gesture based on the action and the touch point quantity. For example, if the touch point quantity is 3, and the action is swiping down, the application program 14 may determine that a current gesture of the user is three-finger swiping down. Then, the application program 14 may compare the current gesture of the user with the preset screenshot gesture. The preset screenshot gesture may be obtained from the configuration file in step 106. For example, if the preset screenshot gesture is three-finger swiping down, to be specific, the touch point quantity of the preset screenshot gesture is 3, and the action is swiping down, the current gesture of the user is consistent with the preset screenshot gesture, so that the application program 14 is enabled to perform the screenshot action. For example, the user browses a web page, and performs an operation on a current page by using three-finger swiping down. After detecting the three-finger swiping down gesture of the user, the screenshot application may identify that the three-finger swiping down is a screenshot operation, and therefore may perform the screenshot operation on the current page. If the user gesture is inconsistent with the preset screenshot gesture, the screenshot operation cannot be performed.

Optionally, after determining that the user gesture is a screenshot gesture, the application program 14 may further obtain an identity of an application corresponding to the current page. For example, it is assumed that the user performs an operation on a drawing page. In this case, an application corresponding to the drawing page is a drawing application (for example, may be drawing software). In this case, the application program 14 may obtain an identity of the drawing application (for example, an APP ID of the drawing application). Then, the application program 14 may match the identity of the drawing application with an identity in a preset application trustlist. The preset application trustlist may include an identity of one or more applications, and the preset application trustlist may be prestored in the application program 14.

If the identity of the current drawing application is in the preset application trustlist, the application program 14 may shield the screenshot gesture, thereby avoiding a conflict between the screenshot action and a current drawing action of the user. Preferably, the application program 14 may also send a screenshot prompt. For example, the prompt information may be a text prompt "Do you want to take a screenshot". The user may tap a "Yes" button to perform the screenshot operation, or the user may tap a "No" button to reject the screenshot operation.

If the identity of the current drawing application is not in the preset application trustlist, the application program 14 may further perform the screenshot operation.

In this embodiment, after the touch data of the user is obtained, the touch data is filtered based on the touch point quantity, so that the screenshot action of the user can be prevented from being misunderstood as another operation (for example, a scrolling operation). Therefore, screenshot efficiency of the user can be improved, and user experience can be improved.

It may be understood that in the foregoing embodiment, step 101 to step 109 are optional steps. This application provides only one feasible embodiment, and may further include more or fewer steps than step 101 to step 109. This is not limited in this application.

In the foregoing embodiment, a manner of performing gesture identification on the touch data in the application program 14 is described by using an example. Then, a manner of performing gesture identification on the touch data in the HID filter driver module 12 is used as an example below for description.

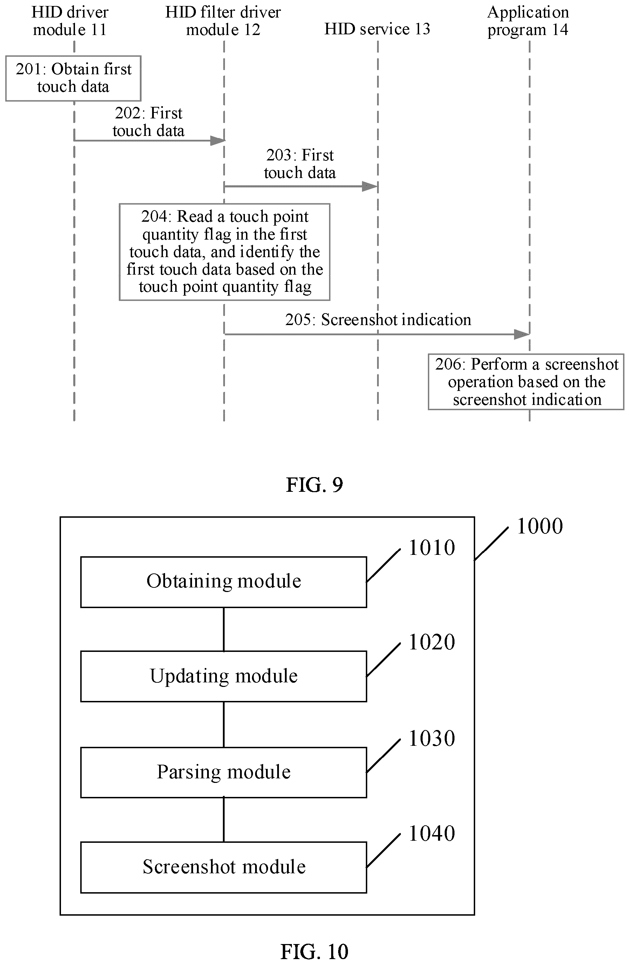

FIG. 9 is a schematic flowchart of another embodiment of a screenshot method according to an embodiment of this application. The method includes the following steps.

Step 201: An HID driver module 11 obtains first touch data.

Specifically, a user may perform an operation such as touch or swipe on a current page. For example, the user may perform an operation such as touch or swipe on a display 194 of an electronic device 100. The current page may include a web page of a browser and a PPT page. It may be understood that the web page of the browser and the PPT page are examples for description, and do not constitute a limitation on this embodiment of this application.

It should be noted that a swipe operation of the user may include a multi-finger swipe operation of the user. For example, the swipe may include swiping up, swiping down, swiping left, swiping right, and the like. This is not limited in this embodiment of this application. The multi-finger may include a gesture such as a three-finger gesture or a four-finger gesture, or may include another type of gesture. This is not specially limited in this embodiment of this application. For a schematic diagram of multi-finger swiping down of the user, refer to FIG. 4. Details are not described herein again.

A touch sensor 180K in the electronic device 100 detects an operation of the user, and the HID driver module 11 may generate corresponding first touch data based on the operation of the user. The first touch data may include information such as a touch point quantity and a touch coordinate. For a data packet format of the first touch data, refer to FIG. 5. Details are not described herein again.

It may be understood that the format of the first touch data packet is merely an example of a field format of touch data. In some embodiments, the touch data may include more or fewer data bits, for example, more than the foregoing 34 bits of data information, or fewer than the foregoing 34 bits of data information. This is not specially limited in this application.

In addition, the HID driver module 11 may also record a moment corresponding to each piece of first touch data.

Step 202: The HID driver module 11 sends the first touch data to an HID filter driver module 12.

Specifically, the HID driver module 11 may sequentially send a plurality of pieces of first touch data to the HID filter driver module 12 in a time sequence. Further, the HID driver module 11 may send a moment corresponding to the first touch data to the HID filter driver module 12. For example, if the HID driver module 11 detects first touch data S1 of the user at a moment t, the HID driver module 11 may send the first touch data S1 and the corresponding moment t to the HID filter driver module 12 at the moment t. In this case, if the user swipes on the display of the electronic device 100 with a finger, the HID driver module 11 detects first touch data S2 of the user at a moment t1, and may send the first touch data S2 and the corresponding moment t1 to the HID filter driver module 12 at the moment t1.

Optionally, the HID driver module 11 may also collect a plurality of pieces of first touch data in a preset time period, and send the plurality pieces of first touch data to the HID filter driver module 12 simultaneously. For example, if the HID driver module 11 detects the first touch data S1 of the user at the moment t, and then detects first touch data S2 and S3 of the user at moments t1 and t2, where both t1 and t2 are later than t, t2 is later than t1, and a time period between t2 and t is the preset time period, the HID driver module 11 may simultaneously send S1, S2, S3, and the corresponding moments t, t1, and t2 to the HID filter driver module 12. It may be understood that the foregoing manner of sending the plurality of pieces of first touch data and the corresponding moments is merely an example for description, and does not constitute a limitation on this embodiment of this application.

Step 203: The HID filter driver module 12 sends the first touch data to an HID service 13.

Step 204: The HID filter driver module 12 reads a touch point quantity flag in the first touch data, and identifies the first touch data based on the touch point quantity flag.

Specifically, after receiving the first touch data sent by the HID driver module 11, the HID filter driver module 12 may further read a value of the touch point quantity flag in the first touch data according to a time sequence, and may perform determining based on the value in the touch point flag. For example, the value may be compared with a preset value, where the preset value may be a touch point quantity of a preset screenshot gesture.

Step 205: The HID filter driver module 12 sends a screenshot indication to an application program 14 based on an identification result.

Specifically, the HID filter driver module 12 may further obtain touch point information in the first touch data. Then, touch point information in two pieces of first touch data may be compared, so that an action of the user may be determined. The action may include swiping up, swiping down, swiping left, swiping right, and the like. The foregoing two pieces of first touch data may be two pieces of touch data that are earliest received and in which a value of the touch point quantity flag is equal to the preset value. Optionally, the two pieces of first touch data may alternatively be a piece of touch data that is earliest received and another piece of touch data, for example, a piece of touch data that is first received and a piece of touch data that is secondly received. It may be understood that selecting two earliest pieces of touch data for comparison is a preferred manner of this application, and does not constitute a limitation on this embodiment of this application.

For example, it is assumed that the HID filter driver module 12 receives the first touch data S1 and the first touch data S2 at moments t and t1 respectively, where t1 is later than t, and S1 is the touch data that is first submitted after the HID driver module 11 detects the user operation, that is, S1 is the touch data that is first received by the HID filter driver module 12; and no other touch data is generated between t and t1, that is, S2 is the touch data that is secondly received by the HID filter driver module 12, and in other words, S1 and S2 are two pieces of touch data that are earliest received. If both a touch point quantity of S1 and a touch point quantity of S2 are equal to the preset value (for example, a value of the touch point quantity of the preset screenshot gesture), in this case, the HID filter driver module 12 can compare the touch point information of S1 and S2.

In a specific implementation, the HID filter driver module 12 may compare one piece of touch point information in S1 with corresponding touch point information in S2, so that the action of the user can be determined. For example, it is assumed that S1 includes first touch point information s11, second touch point information s12, and third touch point information s13, and S2 includes first touch point information s21, second touch point information s22, and third touch point information s23. In this case, the HID filter driver module 12 may compare a coordinate of s11 with a corresponding coordinate of s21, or may compare a coordinate of s12 with a corresponding coordinate of s22, or may compare a coordinate of s13 with a corresponding coordinate of s23, so that the action of the user (for example, whether the action is swiping down) is determined.

Optionally, the HID filter driver module 12 may also compare a plurality of pieces of touch point information of S1 with corresponding touch point information of S2. It may be understood that the foregoing manner of comparing a piece of touch point information in S1 with the corresponding touch point information in S2 is a preferred manner in this embodiment of this application, and does not constitute a limitation on this embodiment of this application. For a specific process of determining the action of the user, refer to step 109. Details are not described herein again. In a process of determining a screen scrolling gesture (for example, in a process of finger swiping of the user), a plurality pieces of first touch data may be generated. It is assumed that six pieces of first touch data are generated in the process of finger swiping of the user. In this case, the HID service 13 needs to determine a change status of the six pieces of first touch data, to determine whether the user gesture is swiping down. However, in this application, only two earliest pieces of first touch data need to be determined. Therefore, before the HID service 13 determines the swiping gesture, the HID filter driver module 12 has determined that a current gesture of the user is swiping down, and further the user gesture can be identified more quickly, to avoid a swiping misoperation caused by the HID service 13 by identifying the swiping gesture.

Then, after determining the user action, the HID filter driver module 12 may determine whether the user action is a screenshot gesture based on the foregoing user action and the touch point quantity. In a specific implementation, the foregoing user action and the touch point quantity may be matched with the action and the touch point quantity of the preset screenshot gesture, where information about the preset screenshot gesture may be pre-stored in a configuration file of the HID filter driver module 12. For specific content of the configuration file, refer to Table 1. Details are not described herein again.

If the HID filter driver module 12 determines that a current gesture of user is the screenshot gesture, the HID filter driver module 12 sends the screenshot indication to the application program 14.

Step 206: The application program 14 receives the screenshot indication sent by the HID filter driver module 12, and performs a corresponding screenshot operation.

In this embodiment, through identification of the user gesture in the HID filter driver module 12 based on the earliest pieces of first touch data, the user gesture can be identified more quickly, so that the screenshot operation can be triggered more quickly, and a conflict between the screenshot operation and the scrolling operation can be avoided.

FIG. 10 is a schematic diagram of an embodiment of a structure of a screenshot apparatus of this application. As shown in FIG. 10, a screenshot apparatus 1000 may include an obtaining module 1010, an updating module 1020, a parsing module 1030, and a screenshot module 1040.

The obtaining module 1010 is configured to obtain first touch data of a user in response to a detected multi-finger swipe operation of the user.

The updating module 1020 is configured to: parse the first touch data, and update the first touch data based on a parsing result to obtain second touch data.

The parsing module 1030 is configured to parse the second touch data to determine whether a user gesture corresponding to the second touch data is a preset screenshot gesture.

The screenshot module 1040 is configured to perform a screenshot operation if it is determined that the user gesture corresponding to the second touch data is the preset screenshot gesture.

In a possible implementation, the first touch data includes a touch point quantity, and the updating module 1020 is further configured to: compare a touch point quantity in the first touch data with a preset first value; and if the touch point quantity in the first touch data is consistent with the preset first value, update the touch point quantity in the first touch data to obtain the second touch data, where the second touch data includes a touch point quantity of a preset second value.

In a possible implementation, the preset second value is a special value.

In a possible implementation, a first application program is installed in an electronic device, the first application program is configured to take a screenshot, and the parsing module 1030 is further configured to send the second touch data to the first application program in response to a received data request of the first application program, so that the first application program parses the second touch data.

In a possible implementation, a second application program is further installed in the electronic device, the second application program is configured to display a page, and the apparatus 1000 further includes:
a prohibition module 1050, configured to: obtain an identity of the second application program; and if the identity of the second application program is in a preset trustlist, prohibit performing the screenshot operation, where the preset trustlist includes an identity of one or more application programs.

In a possible implementation, the second application program is further installed in the electronic device, the second application program is configured to display a page, and the apparatus 1000 further includes:
a prompt module 1060, configured to: obtain the identity of the second application program; and if the identity of the second application program is in the preset trustlist, send a screenshot prompt, where the screenshot prompt prompts the user whether to take a screenshot.

In a possible implementation, the second touch data includes a plurality of pieces of touch point data, each piece of touch point data includes touch point coordinates, and the parsing module 1030 is further configured to: read the touch point data in the second touch data, and determine that a total quantity of pieces of touch point data is the touch point quantity; determine an action of the user based on a change of the touch point coordinates in the touch point data in the second touch data; and determine, based on the touch point quantity and the action of the user, whether the user gesture corresponding to the second touch data is the preset screenshot gesture, where the preset screenshot gesture includes a preset touch point quantity and a preset action.

The screenshot apparatus provided in the embodiment shown in FIG. 10 may be configured to perform the technical solutions in the method embodiments shown in FIG. 1 to FIG. 9 of this application. For an implementation principle and a technical effect of the screenshot apparatus, refer to related descriptions in the method embodiments.

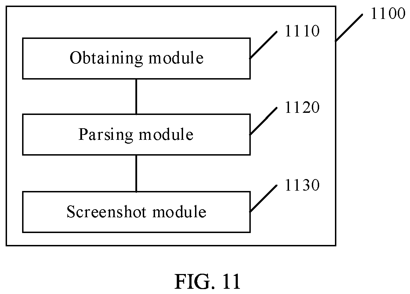

FIG. 11 is a schematic diagram of a structure of a screenshot apparatus according to another embodiment of this application. As shown in FIG. 11, a screenshot apparatus 1000 may include an obtaining module 1110, a parsing module 1120, and a screenshot module 1130.

The obtaining module 1110 is configured to obtain first touch data of a user in response to a detected multi-finger swipe operation of the user.

The parsing module 1120 is configured to parse the first touch data to determine whether a user gesture corresponding to the first touch data is a preset screenshot gesture.

The screenshot module 1130 is configured to perform a screenshot operation if it is determined that the user gesture corresponding to the first touch data is the preset screenshot gesture.

In a possible implementation, the first touch data includes a plurality of pieces of touch point data, each piece of touch point data includes touch point coordinates, and the parsing module 1120 is further configured to: obtain two pieces of first touch data and a touch point quantity in the first touch data; determine an action of the user based on a change of touch point coordinates of touch point data in the two pieces of first touch data; and determine, based on the touch point quantity in the first touch data and the action of the user, whether the user gesture corresponding to the first touch data is the preset screenshot gesture.

In a possible implementation, a first application program is installed in the electronic device, the first application program is configured to take a screenshot, and the screenshot module 1130 is further configured to send a screenshot indication to the first application program if it is determined that the user gesture corresponding to the first touch data is the preset screenshot gesture, where the screenshot indication indicates the first application program to perform the screenshot operation.

The screenshot apparatus provided in the embodiment shown in FIG. 11 may be configured to perform the technical solutions in the method embodiments shown in FIG. 1 to FIG. 9 of this application. For an implementation principle and a technical effect of the screenshot apparatus, refer to related descriptions in the method embodiments.

It should be understood that division into the modules of the screenshot apparatus shown in FIG. 10 and FIG. 11 is merely logical function division. In an actual implementation, all or some of the modules may be integrated into one physical entity, or may be physically separated. In addition, all of these modules may be implemented in a form of software invoked by a processing element, or may be implemented in a form of hardware, or some modules may be implemented in a form of software invoked by a processing element, and some modules are implemented in a form of hardware. For example, the detection module may be a separately disposed processing element, or may be integrated into a chip of an electronic device for implementation. Implementations of other modules are similar. In addition, all or some of these modules may be integrated together, or may be implemented independently. In an implementation process, the steps of the foregoing methods or the foregoing modules may be completed by using an integrated logic circuit of hardware in the processor element or instructions in a form of software.

For example, the foregoing modules may be one or more integrated circuits, for example, one or more application-specific integrated circuits (Application-Specific Integrated Circuit, ASIC for short), one or more microprocessors (Digital Signal Processor, DSP for short), one or more field programmable gate arrays (Field Programmable Gate Array, FPGA for short), or the like, configured to implement the foregoing methods. For another example, these modules may be integrated together and implemented in a form of a system-on-chip (System-On-a-Chip, SOC for short).

It may be understood that an interface connection relationship between the modules shown in this embodiment of this application is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

It may be understood that, to implement the foregoing functions, the electronic device and the like include a corresponding hardware structure and/or a corresponding software module for performing each function. A person skilled in the art should easily be aware that units and algorithm steps in the examples described with reference to embodiments disclosed in this specification can be implemented by hardware or a combination of hardware and computer software in embodiments of this application. Whether a function is executed in a manner of hardware or hardware driven by computer software depends on specific applications and design constraints of the technical solutions. A person skilled in the art may use different methods to implement the described functions for each specific application. However, it should not be considered that the implementation goes beyond the scope of embodiments of this application.

In embodiments of this application, function module division may be performed on the electronic device and the like based on the foregoing method examples. For example, each function module may be obtained through division based on each corresponding function, or two or more functions may be integrated into one processing module. The integrated module may be implemented in a form of hardware, or may be implemented in a form of a software function module. It should be noted that the module division in embodiments of this application is an example, and is merely logical function division. In an actual implementation, there may be another division manner.

Based on the descriptions of the foregoing implementations, a person skilled in the art may clearly understand that, for the purpose of convenient and brief descriptions, division into the foregoing function modules is merely used as an example for description. In an actual application, the foregoing functions may be allocated to different function modules based on a requirement for implementation. That is, an inner structure of the apparatus is divided into different function modules to implement all or some of the functions described above. For a detailed working process of the foregoing system, apparatus, and unit, refer to a corresponding process in the foregoing method embodiments, and details are not described herein again.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions in embodiments of this application essentially, or the part contributing to a current technology, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A screenshot method, applied to an electronic device, wherein the method comprises:
in response to a detected multi-finger swipe operation of a user, obtaining first touch data of the user;
parsing the first touch data, and updating the first touch data based on a parsing result to obtain second touch data;
parsing the second touch data, to determine whether a user gesture corresponding to the second touch data is a preset screenshot gesture; and
performing a screenshot operation if it is determined that the user gesture corresponding to the second touch data is the preset screenshot gesture.

2. The method according to claim 1, wherein the first touch data comprises a touch point quantity, and the updating the first touch data based on a parsing result to obtain second touch data comprises:
comparing the touch point quantity in the first touch data with a preset first value; and
if the touch point quantity in the first touch data is consistent with the preset first value, updating the touch point quantity in the first touch data to obtain the second touch data, wherein the second touch data comprises a touch point quantity of a preset second value.

3. The method according to claim 2, wherein the preset second value is a special value.

4. The method according to claim 1, wherein a first application program is installed in the electronic device, the first application program is configured to take a screenshot, and the parsing the second touch data comprises:
in response to a received data request of the first application program, sending the second touch data to the first application program, so that the first application program parses the second touch data.

5. The method according to claim 4, wherein a second application program is further installed in the electronic device, the second application program is configured to display a page, and the method further comprises:
obtaining an identity of the second application program; and
if the identity of the second application program is in a preset trustlist, prohibiting performing the screenshot operation, wherein the preset trustlist comprises an identity of one or more application programs.

6. The method according to claim 4, wherein a second application program is further installed in the electronic device, the second application program is configured to display a page, and the method further comprises:
obtaining an identity of the second application program; and
if the identity of the second application program is in a preset trustlist, sending a screenshot prompt, wherein the screenshot prompt prompts the user whether to take a screenshot.

7. The method according to claim 1, wherein the second touch data comprises a plurality of pieces of touch point data, each piece of touch point data comprises touch point coordinates, and the parsing the second touch data to determine whether a user gesture corresponding to the second touch data is a preset screenshot gesture comprises:
reading the touch point data in the second touch data, and determining that a total quantity of pieces of the touch point data is a touch point quantity;
determining an action of the user based on a change of the touch point coordinates in the touch point data in the second touch data; and
determining, based on the touch point quantity and the action of the user, whether the user gesture corresponding to the second touch data is the preset screenshot gesture, wherein the preset screenshot gesture comprises a preset touch point quantity and a preset action.

8. A screenshot method, applied to an electronic device, wherein the method comprises:
in response to a detected multi-finger swipe operation of a user, obtaining first touch data of the user;
parsing the first touch data to determine whether a user gesture corresponding to the first touch data is a preset screenshot gesture; and
performing a screenshot operation if it is determined that the user gesture corresponding to the first touch data is the preset screenshot gesture.

9. The method according to claim 8, wherein the first touch data comprises a plurality of pieces of touch point data, each piece of touch point data comprises touch point coordinates, and the parsing the first touch data to determine whether a user gesture corresponding to the first touch data is a preset screenshot gesture comprises:
obtaining two pieces of first touch data and a touch point quantity in the first touch data;
determining an action of the user based on a change of touch point coordinates of touch point data in the two pieces of first touch data; and
determining, based on the touch point quantity in the first touch data and the action of the user, whether the user gesture corresponding to the first touch data is the preset screenshot gesture.

10. The method according to claim 8, wherein a first application program is installed in the electronic device, the first application program is configured to take a screenshot, and the performing a screenshot operation if it is determined that the user gesture corresponding to the first touch data is the preset screenshot gesture comprises:
sending a screenshot indication to the first application program if it is determined that the user gesture corresponding to the first touch data is the preset screenshot gesture, wherein the screenshot indication indicates the first application program to perform the screenshot operation.

11. An electronic device, comprising a memory, wherein the memory is configured to store computer program code, the computer program code comprises instructions, and when the electronic device reads the instructions from the memory, the electronic device is enabled to perform the following steps:
in response to a detected multi-finger swipe operation of a user, obtaining first touch data of the user;
parsing the first touch data, and updating the first touch data based on a parsing result to obtain second touch data;
parsing the second touch data to determine whether a user gesture corresponding to the second touch data is a preset screenshot gesture; and
performing a screenshot operation if it is determined that the user gesture corresponding to the second touch data is the preset screenshot gesture.

12. The electronic device according to claim 11, wherein the first touch data comprises a touch point quantity, and when the instructions are executed by the electronic device, the step in which the electronic device is enabled to update the first touch data based on the parsing result to obtain the second touch data comprises:
comparing the touch point quantity in the first touch data with a preset first value; and
if the touch point quantity in the first touch data is consistent with the preset first value, updating the touch point quantity in the first touch data to obtain the second touch data, wherein the second touch data comprises a touch point quantity of a preset second value.

13. The electronic device according to claim 12, wherein the preset second value is a special value.

14. The electronic device according to claim 11, wherein a first application program is installed in the electronic device, the first application program is configured to take a screenshot, and when the instructions are executed by the electronic device, the step in which the electronic device is enabled to parse the second touch data comprises:
in response to a received data request of the first application program, sending the second touch data to the first application program, so that the first application program parses the second touch data.

15. The electronic device according to claim 14, wherein a second application program is further installed in the electronic device, the second application program is configured to display a page, and when the instructions are executed by the electronic device, the electronic device is enabled to further perform the following steps:
obtaining an identity of the second application program; and
if the identity of the second application program is in a preset trustlist, prohibiting performing the screenshot operation, wherein the preset trustlist comprises an identity of one or more application programs.

16. The electronic device according to claim 14, wherein a second application program is further installed in the electronic device, the second application program is configured to display a page, and when the instructions are executed by the electronic device, the electronic device is enabled to further perform the following steps:
obtaining an identity of the second application program; and
if the identity of the second application program is in a preset trustlist, sending a screenshot prompt, wherein the screenshot prompt prompts the user whether to take a screenshot.

17. The electronic device according to claim 11, wherein the second touch data comprises a plurality of pieces of touch point data, each piece of touch point data comprises touch point coordinates, and when the instructions are executed by the electronic device, the step in which the electronic device is enabled to parse the second touch data to determine whether the user gesture corresponding to the second touch data is the preset screenshot gesture comprises:
reading the touch point data in the second touch data, and determining that a total quantity of pieces of touch point data is a touch point quantity;
determining an action of the user based on a change of the touch point coordinates in the touch point data in the second touch data; and
determining, based on the touch point quantity and the action of the user, whether the user gesture corresponding to the second touch data is the preset screenshot gesture.

18. An electronic device, comprising a memory, wherein the memory is configured to store computer program code, the computer program code comprises instructions, and when the electronic device reads the instructions from the memory, the electronic device is enabled to perform the following steps:
in response to a detected multi-finger swipe operation of a user, obtaining first touch data of the user;
parsing the first touch data to determine whether a user gesture corresponding to the first touch data is a preset screenshot gesture; and
performing a screenshot operation if it is determined that the user gesture corresponding to the first touch data is the preset screenshot gesture.

19. The electronic device according to claim 18, wherein the first touch data comprises a plurality of pieces of touch point data, each piece of touch point data comprises touch point coordinates, and when the instructions are executed by the electronic device, the step in which the electronic device is enabled to parse the first touch data to determine whether the user gesture corresponding to the first touch data is a preset screenshot gesture comprises:
obtaining two pieces of first touch data and a touch point quantity in the first touch data;
determining an action of the user based on a change of touch point coordinates of touch point data in the two pieces of first touch data; and
determining, based on the touch point quantity in the first touch data and the action of the user, whether the user gesture corresponding to the first touch data is the preset screenshot gesture.

20. The electronic device according to claim 18, wherein a first application program is installed in the electronic device, the first application program is configured to take a screenshot, and when the instructions are executed by the electronic device, the step in which the electronic device is enabled to perform a screenshot operation if it is determined that the user gesture corresponding to the first touch data is the preset screenshot gesture comprises:
sending a screenshot indication to the first application program if it is determined that the user gesture corresponding to the first touch data is the preset screenshot gesture, wherein the screenshot indication indicates the first application program to perform the screenshot operation.

21. A computer-readable storage medium, comprising computer instructions, wherein when the computer instructions are run on an electronic device, the electronic device is enabled to perform the method according to any one of claims 1 to 10.

22. A computer program product, wherein when the computer program product runs on a computer, the computer is enabled to perform the method according to any one of claims 1 to 10.
